# EUROPÄISCHE PATENTANMELDUNG

(11) **EP 2 612 557 A2**
(43) Veröffentlichungstag der Anmeldung: **10.07.2013**
(21) Anmeldenummer: 13150034.0
(22) Anmeldetag: 02.01.2013
(51) Int. Cl.: A23G 1/50, A23G 1/54, A23G 1/00, A23G 7/00

(54) **Schokoladenprodukt mit Verpackung**

(30) Priorität: 03.01.2012 DE 202012000010 U; 03.01.2012 DE 102012200058
(71) Anmelder: Chocal Aluminiumverpackungen GmbH, 73525 Schwaebisch Gmuend (DE)
(72) Erfinder: Scherr, Joachim, 71549 Auenwald (DE); Bantleon, Konrad, 89547 Gerstetten (DE)
(74) Vertreter: Raunecker, Klaus Peter

(57) **Zusammenfassung**

Die Erfindung schließt ein verpacktes Schokoladenprodukt mit einer Hauptachse ein, welches in einer Gießform aus einer ersten Formhälfte und einer zweiten Formhälfte hergestellt ist, wobei sich die Kontaktebene der beiden Gießformhälften auf der Oberfläche des Schokoladenprodukts als Nahtstelle abbildet, mit einer Verpackung, welche eine Fügeebene umfasst. Erfindungsgemäß verlaufen die zwischen der ersten Formhälfte und der zweiten Formhälfte umlaufende Nahtstelle und die Fügeebene der Verpackung nicht parallel zueinander.

## Beschreibung

Die Erfindung betrifft ein Schokoladen produkt gemäß dem Oberbegriff des Anspruchs 1.

Die Druckschrift DE 24 35 682 A1 beschreibt ein Herstellungsverfahren eines hohlen eiförmigen Lebensmittelproduktes, bei dem zwei Halbschalen entlang einer Linie miteinander verschlossen oder verbunden werden. Die Halbschalen werden durch Erwärmen erweicht, worauf die zwei Formen zusammengebracht werden, um das gesamte Ei zu bilden und zu bewirken, dass der Rand der einen Schale sich mit dem Rand der anderen Schale verschweißt.

Derartige Produkte werden beispielsweise in Aluminiumfolie oder Papier eingewickelt, entsprechend der verschiedenen Techniken, die aus dem Stand der Technik bekannt sind. Die Bedingungen, unter denen solche Produkte normalerweise gegessen werden, erfordern, dass die Verpackung entweder als Ganzes oder stufenweise entfernt wird, wodurch das Produkt geöffnet wird, um es verzehren zu können. In vielen Fällen stellt sich jedoch heraus, dass das Öffnen des Produktes ein separater Schritt ist, der dem Verzehr vorangeht. Diese Situation tritt normalerweise dann auf, wenn die Person, die den Gegenstand als ein Geschenk kauft oder als ein Geschenk erhält, das Produkt öffnen möchte, um so die darin enthaltene Überraschung zu bekommen.

Des Weiteren ist aus der Druckschrift DE 699 23 328 T2 ein Verfahren zum Umhüllen eines Nahrungsmittels bekannt, mit dem zwei Hälften oder Teile, die das Produkt bilden, miteinander verschlossen werden. Insgesamt muss dabei der Zusammenhalt beim Einwickeln gewährleistet sein, um zu verhindern, dass das Produkt beim Einwickeln auseinanderfällt. Insbesondere zielt das Verpackungsverfahren auf ein Lebensmittelprodukt ab, das aus mehreren Teilen besteht, die im Wesentlichen miteinander auf freie Weise gekoppelt sind und durch die Verpackung oder Umwicklung zusammengehalten werden. Dies soll beim Entfernen der Verpackung sicherstellen, dass die Teile auf einfache Weise getrennt werden können, ohne dass es zerbricht oder verstreut wird.

Es ist Aufgabe der Erfindung, ein Schokoladenprodukt mit einer vorteilhaften Verpackung anzugeben.

Erfindungsgemäß wird diese Aufgabe mit den in Anspruch 1 genannten Merkmalen gelöst. Die weiteren rückbezogenen Ansprüche betreffen vorteilhafte Aus- und Weiterbildungen der Erfindung.

Die Erfindung schließt ein verpacktes Schokoladenprodukt mit einer Hauptachse ein, welches in einer Gießform aus einer ersten Formhälfte und einer zweiten Formhälfte hergestellt ist, wobei sich die Kontaktebene der beiden Gießformhälften auf der Oberfläche des Schokoladenprodukts als Nahtstelle abbildet, mit einer Verpackung, welche eine Fügeebene umfasst. Erfindungsgemäß verlaufen die zwischen der ersten Formhälfte und der zweiten Formhälfte umlaufende Nahtstelle und die Fügeebene der Verpackung nicht parallel zueinander.

Die Erfindung geht dabei von der Überlegung aus, dass die aufeinander liegenden Flächen der Formhälften der Gießform und die Verpackungsebene unterschiedlich sind. Über die Nahtstelle kann beispielsweise eine Bezugsebene geschaffen werden, über die beim Herstellungsprozess eines Schokoladenprodukts auf die Ausgestaltung einer Füllung zurückgeschlossen werden kann. Insbesondere bei runden Formen können so beispielsweise im Innern unterschiedlich geschichtete Füllungen in der Ausrichtung identifiziert und durch die Verpackung berücksichtigt werden. Sollte eine Vorzugsrichtung beim Verzehr für das Geschmacksempfinden eine Rolle spielen, so ist dies an der Ausrichtung der Fügeebene der Verpackung bereits erkennbar, insbesondere wenn keine äußeren geometrischen Merkmale eine Ausrichtung ermöglichen. Der Verbraucher bekommt so über die Verpackung beispielsweise die nötige Information über den Inhalt.

Auch bei ovalen oder eiartigen Formen kann ein Bezug der Verpackungsebene mit der Nahtstelle geschaffen werden. Bei derartigen Formen wird prinzipiell ein stufenweises oder auch ganzes Entfernen der Umhüllung erleichtert. Mit anderen Worten, die Verpackung lässt sich bei einem Ei oder Oval von der Spitze her auch leichter entfernen.

Die durch die erste und zweite Formhälfte verursachte umlaufende Nahtstelle definiert in der Regel den Bereich des größten Umfangs. Im Bereich des größten Umfangs wird folglich auch die Schnittebene maximiert. Es handelt sich dabei um die Kontaktebene der Formhälften bei der Schokoladenherstellung. Durch diese Kontaktstelle entsteht quasi ein umlaufender Grat am Produkt. Jede andere zur maximalen Schnittebene parallele Schnittfläche ist dagegen kleiner. Hierdurch kann ein fertiges und noch unverpacktes Schokoladenprodukt aus der Gießform entnommen werden. Diese Entformbarkeit ist bei der Herstellung eine wichtige Voraussetzung, bei der die Gießform in Bezug auf die Geometrie des Schokoladen produkts keine hinterschnittenen Winkel aufweisen darf.

In bevorzugter Ausgestaltung der Erfindung kann die Fügeebene der Verpackung parallel zur Hauptachse angeordnet sein. Insbesondere bei ovalen oder eiförmigen Schokoladenprodukten werden hierdurch die Gegebenheiten in der besonderen Symmetrie berücksichtigt.

Bevorzugt können die umlaufende Nahtstelle und die Fügeebene der Verpackung senkrecht zueinander verlaufen. Bei besonderen geometrischen Formen, wie beispielsweise eiartigen oder ovalen Formen, lassen sich die Gegebenheiten in der Symmetrie entsprechend berücksichtigen.

Vorteilhafterweise kann die Verpackung aus Folienmaterial bestehen. Es handelt sich bevorzugt um Aluminiumfolie, die entsprechend gut geformt und so auf die äußere Kontur des Schokoladenprodukts angepasst werden kann.

In bevorzugter Ausgestaltung kann die Verpackung einteilig sein. Einteilige Verpackungen werden dabei zuerst um das gesamte Produkt gewickelt und anschließend an der Fügeebene verschlossen.

Alternativ kann in einer vorteilhaften Ausführungsform der Erfindung die Verpackung mehrteilig sein. Bei mehrteiligen Verpackungen entstehen quasi um das Produkt umlaufende Fügelinien, die durch übliche Fügeverfahren besonders einfach zu handhaben sind.

In bevorzugter Ausgestaltung der Erfindung kann die Verpackung an der Fügeebene gebördelt sein. Hierdurch wird durch ein Aufbiegen des an der Fügeebene aufeinandertreffenden Bördelflansches ein Falten ausgeführt. Durch diesen Faltvorgang wird das Material auch an der Oberfläche angelegt. Ohne das Material aufzureißen kann der Verbraucher dann die Verpackung an der Fügeebene teilweise oder vollständig wieder öffnen.

Alternativ kann vorteilhafterweise die Verpackung an der Fügeebene verschweißt sein. Durch Verschweißen wird eine gegenüber Umwelteinflüssen besonders beständige Fügenaht gebildet.

Beispielsweise wird ein Schokoei über einen oben angeordneten Einfüllkanal befüllt. In bevorzugter Ausgestaltung kann eine entlang der Hauptachse vorhandene Einfüllöffnung mittels eines Stopfens, beispielsweise eines Schokoladenstopfens verschlossen sein. Über die Lage der Einfüllöffnung wird üblicherweise auch die Verteilung des Inhalts bestimmt. Unterschiedliche Füllmassen können dabei nicht nur einen schichtweisen Aufbau im Inneren haben, sondern auch durch Fließvorgänge bestimmt, komplexere Verteilungen aufweisen.

In bevorzugter Ausgestaltung der Erfindung kann die Verpackung auf die Kontur der Oberfläche nachgeformt sein. Insbesondere findet ein Nachformen an den Stellen statt, die nicht unmittelbar durch ein Umwickeln mit Folie belegt werden. Dies betrifft beispielsweise Einbuchtungen oder Strukturen an der Oberfläche eines Schokoladenproduktes, an denen durch bloßes Überschieben der Verpackung die Oberfläche nicht an allen Stellen vom Verpackungsmaterial berührt wird. An diesen Stellen wird beispielsweise die Folie mit einem gewissen Übermaß versehen und in die Vertiefungen gedrückt oder angebürstet.

Weitere vorteilhafte Weiterbildungen und Ausgestaltungen der Erfindung ergeben sich aus den nachfolgend anhand der Zeichnungen prinzipmäßig beschriebenen Ausführungsbeispielen.

Es zeigt:
- Fig. 1: schematisch ein ovales Schokoladenprodukts mit Verpackung und Nahtstelle; und
- Fig. 2: schematisch ein eiförmiges Schokoladenprodukts mit Verpackung und Nahtstelle.

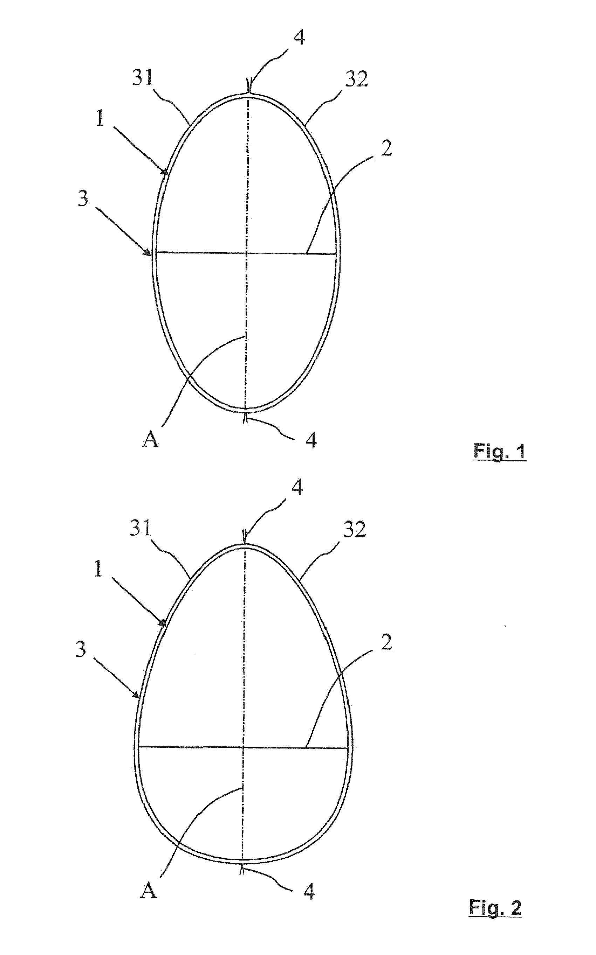

Fig. 1 zeigt schematisch eine Ansicht eines ovalen Schokoladenprodukts 1 mit Verpackung 3. Die Verpackung 3 besteht aus zwei Formhälften 31 und 32. Die erste Formhälfte 31 und zweite Formhälfte 32 umschließen im gezeigten Beispiel das Schokoladenprodukt 1 jeweils zur Hälfte; auch eine andere Aufteilung der Formhälften 31,32 ist denkbar. An der Fügeebene 4 ist ein Fügeflansch durch einen gewissen Überlapp beider Hälften ausgebildet, an dem ein Bördeln oder Verschweißen stattfinden kann. Die Hauptachse A ist die Symmetrieachse des Ovals, die in diesem Fall senkrecht zur Nahtstelle 2 steht. Die Nahtstelle 2 ist hier sichtbar dargestellt, um die Bezugsrichtungen des Schokoladenprodukts 1 und der Verpackung 3 zu verdeutlichen.

Fig. 2 zeigt schematisch ein eiförmiges Schokoladenprodukt 1 mit Verpackung 3 mit Nahtstelle 2. Die Nahtstelle 2 teilt die Eispitze vom Eistumpf und definiert den Bereich des größten Umfangs des Eies senkrecht zur Hauptachse A. In diesem Bereich wird die Schnittebene maximiert. Jede andere zu dieser maximalen Schnittebene parallele Schnittfläche ist zur Eispitze oder zum Eistumpf hin kleiner. Hierdurch wird die Entformbarkeit bei der Herstellung gewährleistet, wobei keine hinterschnittenen Bereiche vorhanden sind. Die Verpackung wird wiederum aus zwei Formhälften 31 und 32 an der Fügeebene 4 verschlossen.

### Bezugszeichenliste:

- 1: Schokoladenprodukt
- 2: Nahtstelle
- 3: Verpackung
- 31: erste Formhälfte
- 32: zweite Formhälfte
- 4: Fügeebene
- A: Hauptachse

## Patentansprüche

1. Verpacktes Schokoladenprodukt (1) mit einer Hauptachse (A), welches in einer Gießform aus einer ersten Formhälfte und einer zweiten Formhälfte hergestellt ist, wobei sich die Kontaktebene der beiden Gießformhälften auf der Oberfläche des Schokoladenprodukts als Nahtstelle (2) abbildet, mit einer Verpackung (3), welche eine Fügeebene (4) umfasst,
**dadurch gekennzeichnet,**
**dass** die zwischen der ersten Formhälfte und der zweiten Formhälfte umlaufende Nahtstelle (2) und die Fügeebene (4) der Verpackung (3) nicht parallel zueinander verlaufen.

2. Schokoladenprodukt (1) nach Anspruch 1,
**dadurch gekennzeichnet, dass** die Fügeebene (4) der Verpackung (3) parallel zur Hauptachse (A) angeordnet ist.

3. Schokoladenprodukt (1) nach Anspruch 1 oder 2,
**dadurch gekennzeichnet, dass** die umlaufende Nahtstelle (2) und die Fügeebene (4) der Verpackung (3) senkrecht zueinander verlaufen.

4. Schokoladenprodukt (1) nach einem der Ansprüche 1 bis 3,
**dadurch gekennzeichnet, dass** die Verpackung (3) aus Folienmaterial besteht.

5. Schokoladenprodukt (1) nach einem der Ansprüche 1 bis 4,
**dadurch gekennzeichnet, dass** die Verpackung (3) einteilig ist.

6. Schokoladen produkt (1) nach einem der Ansprüche 1 bis 4,
**dadurch gekennzeichnet , dass** die Verpackung (3) mehrteilig ist.

7. Schokoladen produkt (1) nach einem der Ansprüche 1 bis 6,
**dadurch gekennzeichnet , dass** die Verpackung (3) an der Fügeebene (4) gebördelt ist.

8. Schokoladenprodukt (1) nach einem der Ansprüche 1 bis 6,
**dadurch gekennzeichnet , dass** die Verpackung (3) an der Fügeebene (4) verschweißt ist.

9. Schokoladenprodukt (1) nach einem der Ansprüche 1 bis 8,
**dadurch gekennzeichnet , dass** eine entlang der Hauptachse (A) vorhandene Einfüllöffnung mittels eines Schokoladenstopfens verschlossen ist.

10. Schokoladenprodukt (1) nach der Ansprüche 1 bis 9,
**dadurch gekennzeichnet , dass** die Verpackung (3) auf die Kontur der Oberfläche nachgeformt ist.
